# EUROPEAN PATENT APPLICATION

(11) **EP 4 728 850 A1**
(43) Date of publication of application: **22.04.2026**
(21) Application number: 25208971.9
(22) Date of filing: 15.10.2025
(51) Int. Cl.: A01D 45/00, A01G 22/10

(54) **ASPARAGUS HARVESTING DEVICE**

(30) Priority: 16.10.2024 NL 1044975
(71) Applicant: Lommers Tuinbouwmachines BV, 5571 LH Bergeijk (NL)
(72) Inventor: LOMMERS, Antonius Godefridus Maria Cornelis, 5571 JT Bergeijk (NL)
(74) Representative: Verhees, Godefridus Josephus Maria

(57) **Abstract**

An asparagus harvesting device 1 has a movable cutting arm 5, one end of which is attached to a harvesting blade 3, and the other end is attached to a displacement mechanism 7, which comprises two pairs of cam elements 15 and 16, each provided with grooves 17 and 18, within which cam followers 11 and 12 can be moved. These cam followers 11 and 12 are attached to the cutting arm 5. The grooves 17 and 18 define two different cam tracks 9 and 10, which are configured such that, during use, the harvesting blade 3 first undergoes a downward movement with the cutting edge 3A pointing downward, followed by a lateral movement that transitions into a rotational movement about an imaginary horizontal axis, with the cutting edge 3A positioned at an angle to the vertical.

## Description

### Technical field of the invention

The invention relates to an asparagus harvesting device comprising:
- a cutting blade for cutting an asparagus spear, and
- a cutting arm, to a first end of which the cutting blade is attached and which is connected to a displacement mechanism at the other, second end.

### Background of the invention

An asparagus harvesting device is known from US 4 003 193 A. In this known asparagus harvesting device, the cutting arms are pivotally connected about one end to a support that is equipped with a cam follower that contacts a cam profile to allow the cutting arm to rotate about the pivot point and thereby cut an asparagus spear.

### Summary of the invention

An object of the invention is to provide an asparagus harvesting device that is more reliable, experiences less wear, and the cutting blade becomes blunt less quickly than in the known asparagus harvesting device. To this end, the asparagus harvester according to the invention is characterized in that the displacement mechanism:
- comprises two different cam tracks and two cam followers connected to the harvester arm at a distance from each other near the second end, as well as
- a drive that moves the harvester arm along the cam tracks with the cam followers,
- the cam tracks being configured such that, during use, the harvester blade first undergoes a downward movement with the cutting edge pointing downward, followed by a lateral movement that transitions into a rotational movement about an imaginary horizontal axis with the cutting edge positioned at an angle to the vertical.

With the asparagus harvester according to the invention, there are no moving parts in the ground during use, so that no wear and tear can occur due to moving parts, and no malfunctions can occur due to moving parts. Furthermore, the asparagus is cut in half, not sheared, resulting in a smoother cutting surface.

Preferably, the cam tracks are defined by grooves in a cam element, and the cam followers are formed by rollers that can be moved through the grooves.

An embodiment of the asparagus cutting device according to the invention is characterized in that the grooves comprise a more vertically extending first path and a connecting, more horizontally extending second path with a downward-turned third path near the end, thereby achieving the desired movement of the cutting blade for cutting an asparagus spear.

A further embodiment of the asparagus harvesting device according to the invention is characterized in that, in addition to the two cam followers, the asparagus harvesting device comprises two further cam followers, with each pair of cam followers and further cam followers located directly opposite each other on either side of the cutting arm. In addition to the two cam tracks, the asparagus harvesting device is also equipped with two further cam tracks parallel to the aforementioned cam tracks, with each pair of cam tracks and further cam tracks being spaced apart, with the cam track and further cam track of one of the pairs located between the cam track and the further cam track of the other pair. This results in a more favorable load distribution on the moving parts of the asparagus harvesting device, resulting in less wear and tear and a reduced risk of the cam followers seizing.

To ensure a compact design for the asparagus harvesting device, the cam followers of a pair are preferably connected to the cutting arm via two parallel, spaced-apart supports. Yet another embodiment of the asparagus harvester according to the invention is characterized in that the drive comprises a drive motor with an output shaft to which a drive arm is attached, which is pivotally connected to the harvester arm via a pivoting coupling arm. This creates a robust and reliable drive.

Another embodiment of the asparagus harvester according to the invention is characterized in that the displacement mechanism comprises a rod mechanism comprising a four-rod mechanism, as well as a drive that moves the four-rod mechanism, with the harvester arm being attached to a rod of the four-rod mechanism. The advantage of a rod mechanism over a cam mechanism is that it creates less friction and reduces the risk of buckling.

Preferably, the four-bar mechanism comprises a first bar configured to be attached to an external support, a second bar having one end pivotally connected to an end of the first bar, a third bar having one end pivotally connected to another end of the second bar, and a fourth bar having one end pivotally connected to another end of the first bar, wherein the third and fourth rods are hingedly connected to each other at other ends, with the cutting arm being attached to the third rod.

To better achieve the desired movement of the cutting arm, a further embodiment of the asparagus harvesting device according to the invention is characterized in that the drive comprises a motor that moves a drive rod, one end of which is hingedly connected to the third rod, to a support attached to one end of the third rod.

The rod mechanism of this embodiment of the asparagus harvesting device preferably also comprises a parallelogram mechanism connected to a four-rod mechanism, as well as a further drive that moves the parallelogram mechanism to move the four-rod mechanism upwards.

A favorable embodiment of the rod mechanism is characterized in that:
- the parallelogram mechanism comprises a first rod formed by a portion of a frame, as well as a second rod parallel to the first rod, and a third and fourth rod parallel to each other and hingedly connected to the first and second rods, and
- the first rod of the four-rod mechanism is attached to the second rod of the parallelogram mechanism.

### Brief description of the drawings

The invention will be explained in more detail below using exemplary embodiments of the asparagus harvesting device according to the invention shown in the drawings. These drawings show:
Figure 1: a first embodiment of the asparagus harvesting device according to the invention, in perspective, positioned above an asparagus spear to be harvested in an asparagus bed;
Figure 2: a perspective view of the asparagus harvesting device shown in Figure 1 during harvesting of an asparagus spear;
Figure 3: a side view of the asparagus harvesting device shown in Figure 1 during harvesting of an asparagus spear;
Figure 4: The asparagus harvester shown in Figure 1, seen from a front view while harvesting an asparagus spear;
Figure 5: The asparagus harvester shown in Figure 1, seen from an opposite side in perspective while harvesting an asparagus spear;
Figure 6: An exploded view of the asparagus harvester shown in Figure 1, seen from an opposite side in perspective while harvesting an asparagus spear;
Figure 7: A second embodiment of the asparagus harvester according to the invention, seen from a perspective view with the harvester arm in a starting position while harvesting an asparagus spear;
Figure 8: The asparagus harvester shown in Figure 7, seen from the harvester arm in a position immediately after cutting an asparagus spear;
Figure 9: The asparagus harvester shown in Figure 8, seen from a perspective view from a first direction;
Figure 10: The asparagus harvester shown in Figure 8, seen from a perspective view from a second direction;
Figure 11: The asparagus harvester shown in Figure 8, seen from a perspective view from a third direction;
Figure 12: The asparagus harvester shown in Figure 8, viewed from a fourth direction in perspective;
Figure 13: The asparagus harvester shown in Figure 7 with the harvester arm in the retracted position;
Figure 14: The asparagus harvester shown in Figure 7 with the harvester arm in the extended position;
Figure 15: The asparagus harvester shown in Figure 7 with the harvester arm in a position immediately before cutting an asparagus spear; and
Figure 16: The asparagus harvester shown in Figure 7 with the harvester arm in a position immediately after cutting an asparagus spear.

### Detailed description of the drawings

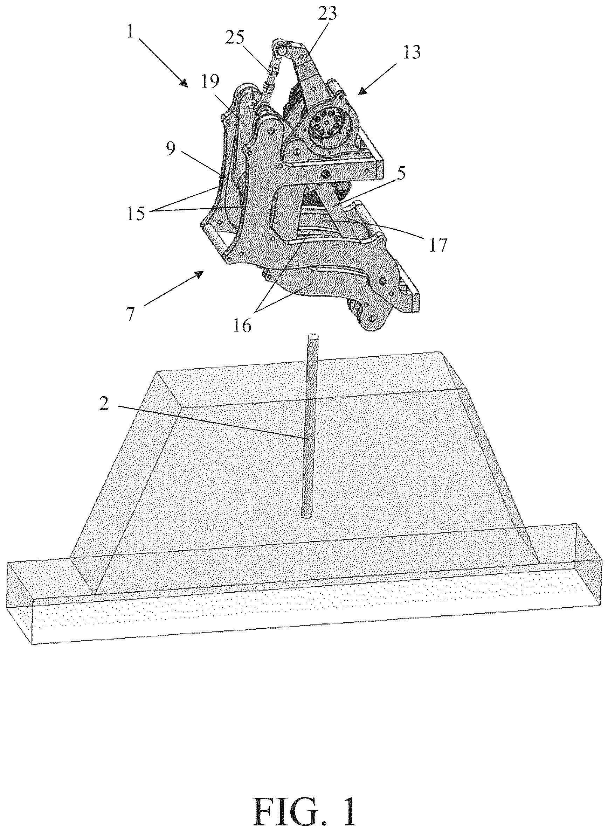

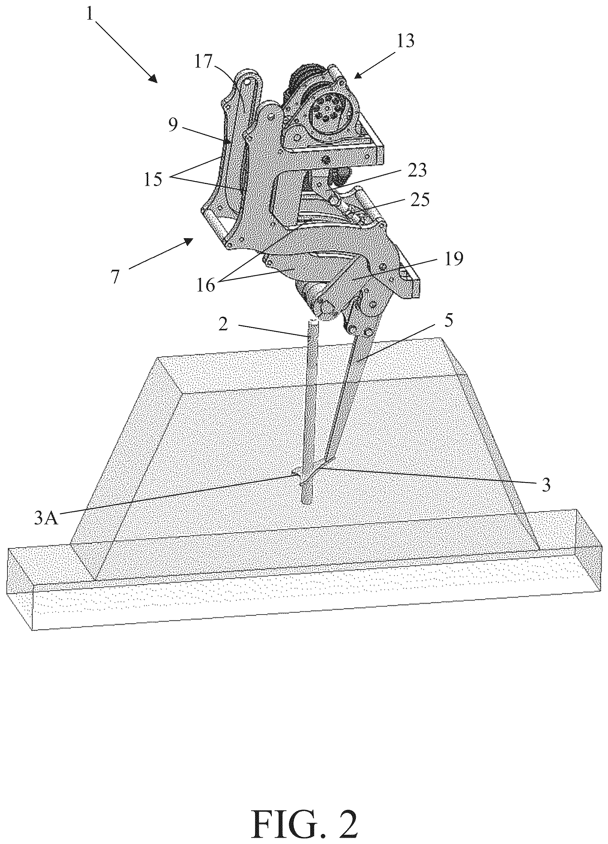

Figures 1 and 2 show an embodiment of the asparagus harvester 1 according to the invention in an inactive position (Figure 1) and in a position during harvesting of an asparagus spear 2 (Figure 2). The asparagus harvester 1 has a movable harvester arm 5. A harvester blade 3 is attached to a first end of this harvester arm 5. The harvester blade 3 has a cutting edge 3A for cutting an asparagus spear 2. The harvester arm 5 is attached at its other, second end to a displacement mechanism 7.

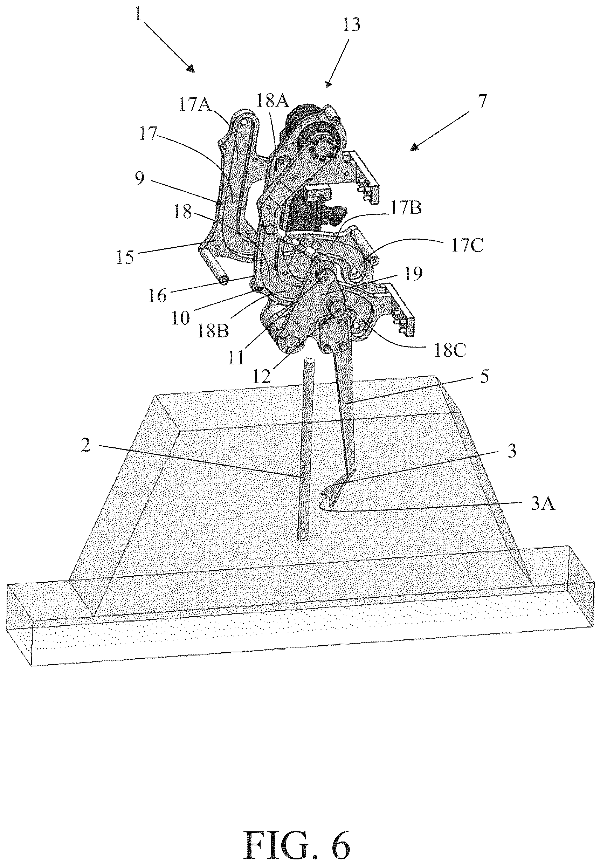

The displacement mechanism 7 comprises two pairs of cam elements 15 and 16. The cam elements 15 and 16 of each pair are spaced apart and are provided with grooves 17 and 18 in their facing surfaces; see also Figure 6, which shows an exploded view of the asparagus harvester 1. The cam elements 16 of one of the pairs are located between the cam elements 15 of the other pair, see Figures 1 and 2. The grooves 17 and 18 in the cam elements 15 and 16 of each pair are identical to each other and the grooves 17 in the cam elements 15 of one pair differ from the grooves 18 of the cam elements 16 in the other pair. The grooves 17 and 18 define two different cam tracks 9 and 10 which are shaped such that the blade 3, during use, first undergoes a downward movement with the cutting edge 3A directed downwards followed by a lateral movement which changes into a rotational movement about an imaginary horizontal axis with the cutting edge 3A in a position at an angle to the vertical direction.

The course of grooves 17 and 18 is clearly visible in Figure 6, which shows an exploded view of the asparagus cutting device 1. Grooves 17 and 18 each comprise a first section 17A and 18A extending from top to bottom, a connecting second section 17B and 18B extending from left to right, and a connecting third section 17C and 18C rotated downward.

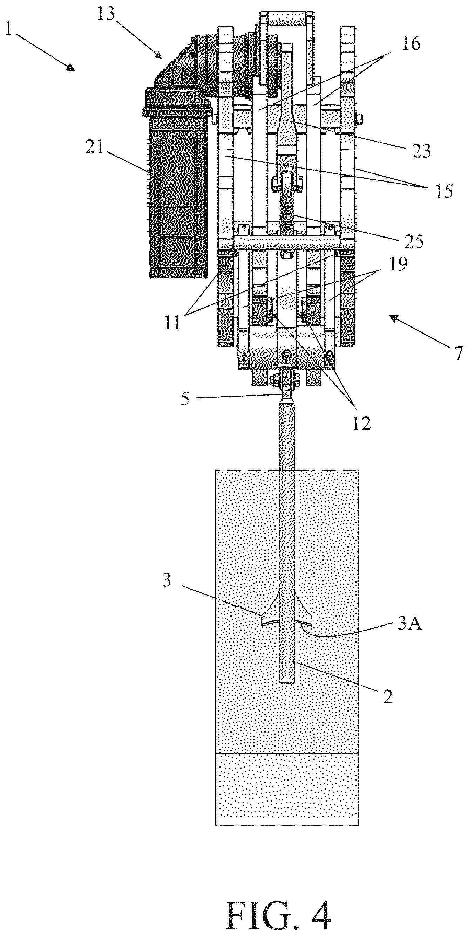

The displacement mechanism 7 is further equipped with two pairs of cam followers 11 and 12, see Figure 6. These pairs are connected to the cutting arm 5 at a distance from each other near the second end, with the cam followers 11 and 12 of a pair located on either side of the cutting arm 5, see Figure 4, which shows the asparagus harvesting device 1 in front view. The cam followers are formed by rollers that can be moved by grooves 17 and 18 in cam elements 15 and 16. The cutting arm 5 is moved by a drive 13, whereby the cam followers 11 and 13 move along the cam tracks 9 and 10, causing the cutting arm 5 to perform a movement determined by the cam tracks 9 and 10.

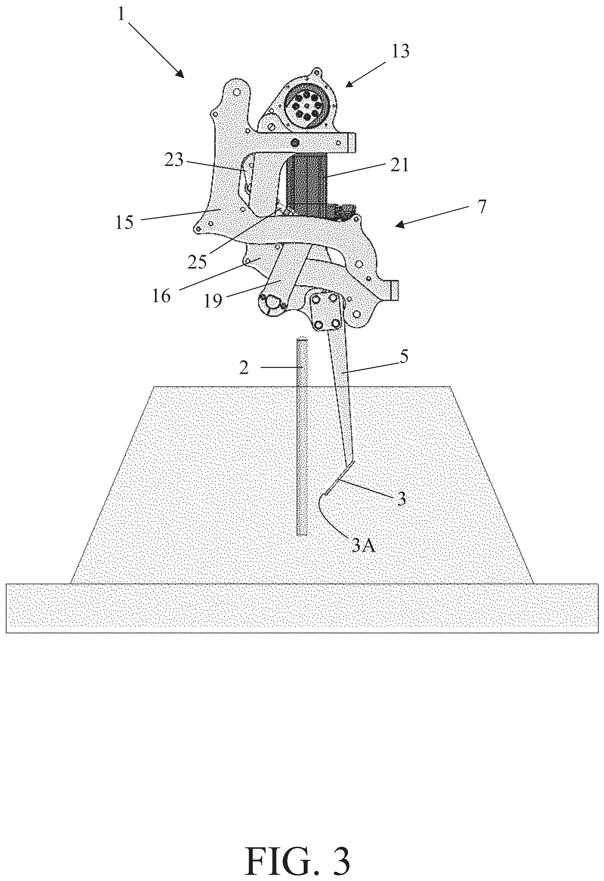

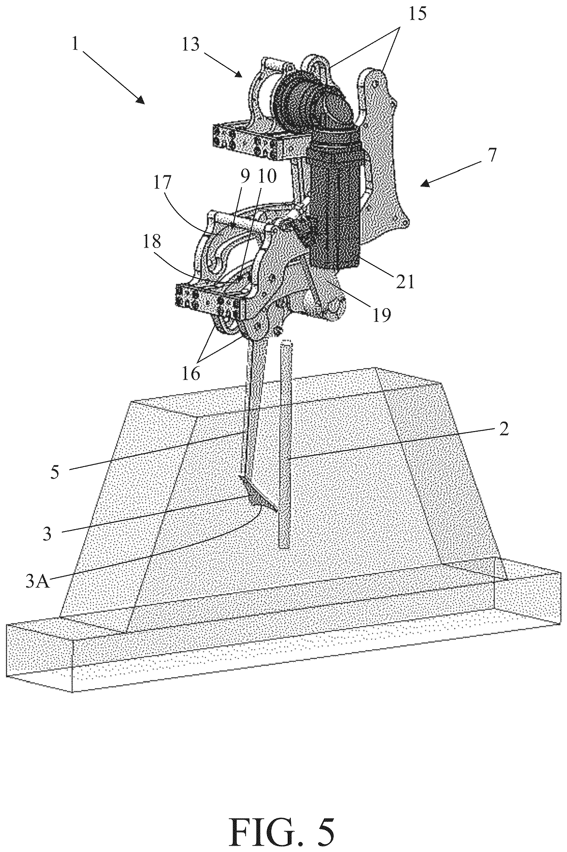

The cam followers 11 are connected to the cutting arm 5 via two parallel, spaced-apart carriers 19. In Figures 3 and 5, these carriers 19 are clearly visible.

The drive 13 consists of a drive motor 21, which is equipped with an output shaft to which a drive arm 23 is attached. This drive arm is pivotally connected to the cutting arm 5 via a pivotally connected coupling arm 25. This is particularly visible in Figures 1 and 2.

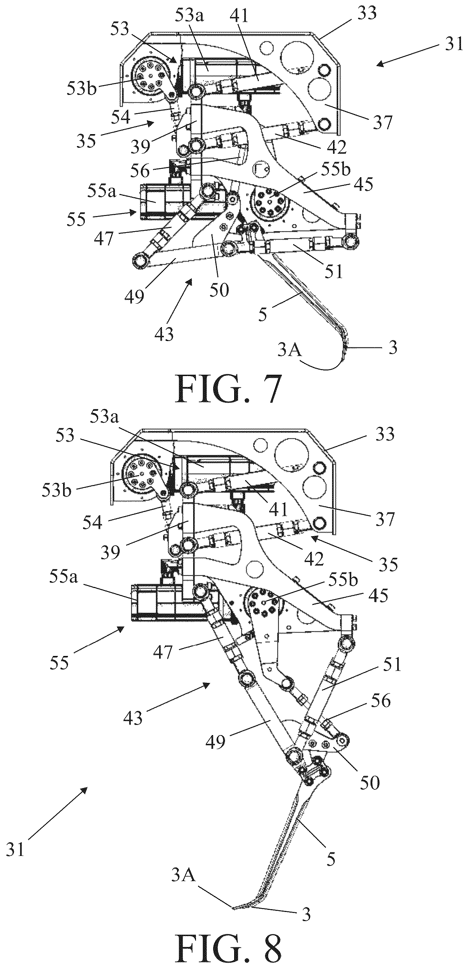

In Figures 7 and 8, a second embodiment of the asparagus harvesting device according to the invention is shown in perspective, with the cutting arm in a starting position during harvesting of an asparagus spear, in a position immediately after cutting an asparagus spear.

In this asparagus harvesting device 31, the displacement mechanism is formed by a rod mechanism. This rod mechanism has a frame 33, a parallelogram mechanism 35 connected to the frame, and a four-rod mechanism 43 connected to the parallelogram mechanism, to which the cutting arm 5 is connected.

The first rod 37 of the parallelogram mechanism 35 is part of the frame 33 and is formed by the part of the frame extending between the pivot points of the third and fourth parallel rods 39 and 41. A second rod 39 of the parallelogram mechanism 35 is parallel to the first rod 37. The third and fourth rods 39 and 41 are pivotally connected to the first and second rods 37 and 39.

A first rod 45 of the four-rod mechanism 43 is rigidly attached to the second rod 39 of the parallelogram mechanism 35. A second rod 47 is pivotally connected to the second rod 39 of the parallelogram mechanism 35. A third rod 49 is pivotally connected to the second rod 47. A fourth rod 51 is pivotally connected to the first rod 45 and the third and fourth rods 49. and 51 are hingedly connected to each other.

The linkage mechanism also has a first drive 53, which is attached to frame 33 and moves parallelogram mechanism 35. This first drive 53 is equipped with a motor 53a that, via a bevel gear 53b, moves a drive rod 54, which is hingedly connected to the second rod 39. Furthermore, the linkage mechanism has a second drive 55 that moves four-rod mechanism 3. This second drive 55 is also equipped with a motor 55a that, via a bevel gear 55b, moves a drive rod 56, which is hingedly connected to a support 50 attached to the third rod 49.

The cutting arm 5 is attached at a second end to the support 50 and thus also to the third rod 49, and thus follows the movement of the third rod 49.

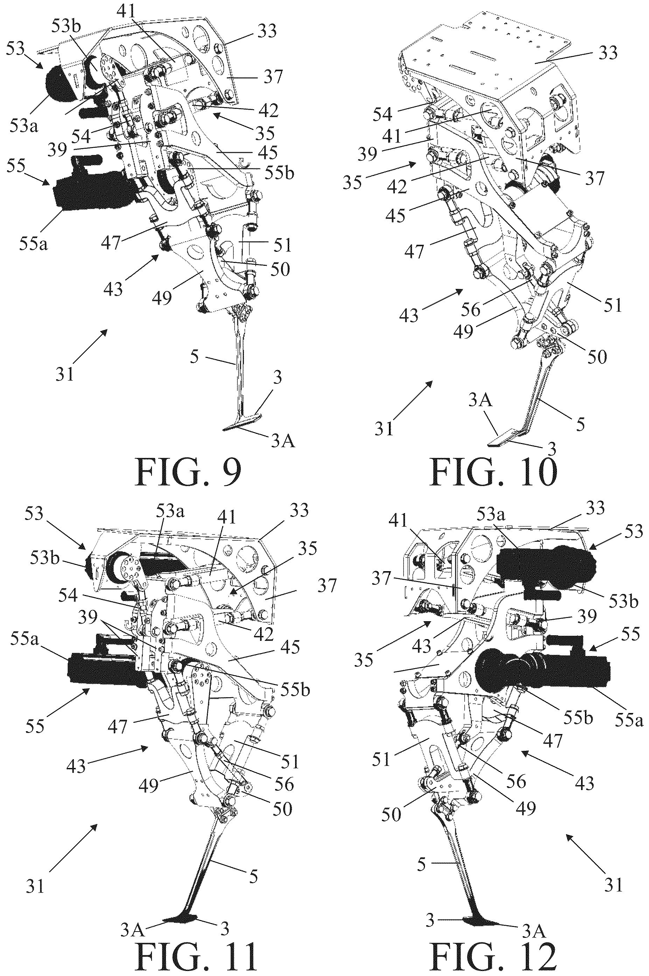

For clarification, Figures 9 through 12 show the asparagus harvesting device 31 with the cutting arm 5 in the position immediately after cutting an asparagus spear, viewed from various angles.

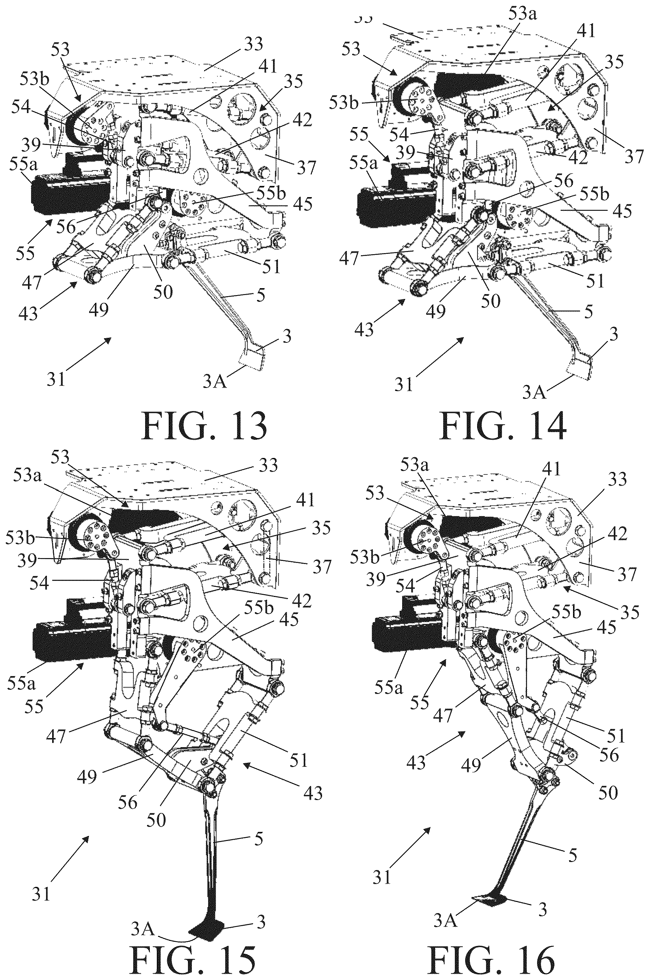

Figures 13 through 16 show the asparagus harvesting device 31 in various positions during operation.

Figure 13 shows the asparagus harvesting device 31 with the cutting arm 5 in the retracted position, and Figure 14 shows the asparagus harvesting device 31 with the cutting arm 5 in the extended position for cutting an asparagus spear.

Figure 15 shows the asparagus harvester 31 with the harvester arm 5 in a position immediately before cutting an asparagus spear, and Figure 16 shows the asparagus harvester 31 with the harvester arm 5 in a position immediately after cutting an asparagus spear.

Although the invention has been explained above with reference to the drawings, it should be noted that the invention in no way limits itself to the embodiments shown in the drawings. The invention also extends to all embodiments that deviate from the embodiments shown in the drawings, within the scope defined by the claims.

## Claims

1. Asparagus cutting device (1; 31) comprising:
- a movable cutting arm (5) with a cutting blade (3) at a first end which is at an angle to the cutting arm (5) and is provided with a cutting edge (3A) which is perpendicular to the direction of movement of the cutting blade (3), and
- a displacement mechanism (7), which comprises a cam mechanism with a cam track and a cam follower or which comprises a rod mechanism, which cam mechanism or rod mechanism is configured to cause the cutting arm (5) to move such that the cutting blade (3) makes a cutting movement in a direction which is more horizontal than vertical and perpendicular to the cutting edge (3A),
**characterized in that** the cam mechanism or rod mechanism is configured such that the cutting arm (5) first undergoes a downward displacement in which it rotates from an inclined position to a vertical position, followed by a further rotation in which the cutting arm (5) further rotates and the cutting blade (3) makes the cutting movement.

2. Asparagus cutting device (1) according to claim 1, **characterized in that** the displacement mechanism comprises a cam mechanism that:
- is provided with two different cam tracks (9, 10) and two cam followers (11, 12) connected to the cutting arm (5) at a distance from each other near the second end, or a rod mechanism, and
- a drive (13) that moves the cutting arm (5) with the cam followers (11, 12) along the cam tracks (9, 10).
wherein the cam tracks (9, 10) are configured such that, during use, the cutting blade (3) first undergoes a downward movement with the cutting edge (3A) pointing downward, followed by a lateral movement that transitions into a rotational movement about an imaginary horizontal axis with the cutting edge (3A) in a position at an angle to the vertical.

3. Asparagus harvesting device according to claim 2, **characterized in that** the cam tracks (9, 10) are defined by grooves (17, 18) present in a cam element (15, 16), and the cam followers (11, 12) are formed by rollers that can be moved through the grooves (17, 18).

4. Asparagus harvesting device according to claim 3, **characterized in that** the grooves (17, 18) comprise a more vertically extending first section (17A, 18A) and a connecting, more horizontally extending second section (17B, 18B) with a downwardly turned third section (17C, 18C) near the end.

5. Asparagus harvesting device according to claim 2, 3 or 4, **characterized in that** the asparagus harvesting device (1) comprises, in addition to the two cam followers (11, 12), two further cam followers, each pair of cam followers (11, 12) and further cam followers being located directly opposite each other on either side of the cutting arm (5), and that the asparagus harvesting device (1) is provided, in addition to the two cam tracks (9, 10), with two further cam tracks which are parallel to said cam tracks, each pair of cam tracks and further cam tracks being located at a distance from each other, the cam track (10) and the further cam track of one of the pairs being located between the cam track (9) and the further cam track of the other pair.

6. Asparagus harvesting device according to claim 5, **characterized in that** the cam followers (11) of a pair are connected to the cutting arm (5) via two parallel, spaced-apart supports (19).

7. Asparagus harvesting device according to any of the preceding claims 2-6, **characterized in that** the drive (13) comprises a drive motor (21) provided with an output shaft to which a drive arm (23) is attached, which is pivotally connected to the cutting arm (5) via a pivotally connected coupling arm (25).

8. Asparagus harvesting device (31) according to claim 1, **characterized in that** the displacement mechanism comprises a linkage mechanism that moves a four-link mechanism (43), and a drive (55) that moves the four-link mechanism (43), with the cutting arm (5) being attached to a link (49) of the four-link mechanism (43).

9. Asparagus harvesting device (31) according to claim 8, **characterized in that** the four-bar mechanism (43) comprises a first bar (45) configured to be attached to an external support, and a second bar (47) pivotally connected at one end to one end of the first bar, a third bar (49) pivotally connected at one end to another end of the second bar (47), and a fourth bar (51) pivotally connected at one end to another end of the first bar (45), the third and fourth bars (49, 51) being pivotally connected to each other at other ends, the cutting arm (5) being attached to the third bar (49).

10. Asparagus harvesting device (31) according to claim 9, **characterized in that** the drive (55) comprises a motor (55a) that moves a drive rod (56) which, remote from the third rod (49), with an end is hingedly connected to a support (50) attached to the third rod (49) at one end of the third rod.

11. Asparagus harvesting device (31) according to claim 8, 9 or 10, **characterized in that** the rod mechanism of the displacement mechanism further comprises a parallelogram mechanism (35) connected to the four-rod mechanism (43), and a further drive (53) that moves the parallelogram mechanism (35).

12. Asparagus harvesting device (31) according to claim 11, **characterized in that**:
- the parallelogram mechanism (35) comprises a first rod (37) formed by a portion of a frame (33), a second rod (39) parallel to the first rod (37), and third and fourth rods (41, 42) parallel to each other and pivotally connected to the first and second rods (37, 39), and
- the first rod (45) of the four-rod mechanism (43) is attached to the second rod (39) of the parallelogram mechanism (35).
